# EUROPEAN PATENT APPLICATION

(11) **EP 4 592 258 A1**
(43) Date of publication of application: **30.07.2025**
(21) Application number: 23868067.2
(22) Date of filing: 08.09.2023
(51) Int. Cl.: C03C 8/08

(54) **GLASS FRIT, AND METHOD FOR MANUFACTURING GLASS FRIT**

(30) Priority: 20.09.2022 JP 2022148695
(71) Applicant: AGC INC., Chiyoda-ku, Tokyo 1008405 (JP)
(72) Inventor: SUZUKI, Miyuri, Tokyo 100-8405 (JP); YAMADA, Kohta, Tokyo 100-8405 (JP); TERATANI, Takuya, Tokyo 100-8405 (JP); ITO, Kazuhiro, Tokyo 100-8405 (JP)
(74) Representative: Müller-Boré & Partner Patentanwälte PartG mbB
(86) International application number: PCT/JP2023/032809
(87) International publication number: WO 2024/062944

(57) **Abstract**

Provided is a glass frit having: lithium (Li), element M, phosphorus (P) and oxygen (O); and at least one among boron (B) and silicon (Si), wherein the element M comprises at least one selected from the group consisting of zirconium (Zr), hafnium (Hf), tin (Sn), samarium (Sm), niobium (Nb), tantalum (Ta), tungsten (W), and molybdenum (Mo), and the glass frit includes a seed crystal.

## Description

### TECHNICAL FIELD

The present invention relates to a glass frit and a method for producing a glass frit

### BACKGROUND ART

In recent years, an all-solid-state lithium ion battery has been attracting attention from the viewpoint of safety, high-speed charging, and the like. The all-solid-state lithium ion battery uses a solid electrolyte instead of a liquid electrolyte, and is therefore free from problems such as leakage and has high safety.

### CITATION LIST

### PATENT LITERATURE

Patent Literature 1: WO2021/039834

### SUMMARY OF INVENTION

### TECHNICAL PROBLEM

So far, a sulfide-based solid electrolyte has been known as a solid electrolyte for the lithium ion battery. However, the sulfide-based solid electrolyte has the problem of generating hydrogen sulfide when reacting with moisture in the air.

On the other hand, an oxide-based solid electrolyte has higher environmental stability and is easier to handle than the sulfide-based solid electrolyte, and is therefore considered to be a promising material for use as a solid electrolyte in an all-solid-state battery.

However, the currently available oxide-based solid electrolyte has a problem in terms of lithium ion conductivity. For example, the lithium ion conductivity of the currently available oxide-based solid electrolyte is at least one order of magnitude lower than the lithium ion conductivity of a common sulfide-based solid electrolyte.

Under such a background, LiTa₂PO₈ has been attracting attention in recent years as a new ion conductive oxide having a high ion conductivity (Patent Literature 1).

However, according to the inventors of the present application, when the LiTa₂PO₈ crystal is used as a solid electrolyte in an electrode, it is understood that it is not easy to sufficiently co-sinter an active material and the solid electrolyte. When the active material and the solid electrolyte are not sintered sufficiently, a contact area between the two is small, making it difficult to increase the ion conductivity. On the other hand, when an attempt is made to increase a sintering temperature in order to sufficiently proceed the co-sintering, there is a risk that the active material is then damaged by heat, and is not able to exhibit sufficient properties.

The present invention has been made in view of the above background, and an object of the present invention is to provide a glass frit for a solid electrolyte capable of sufficiently bonding an active material and a solid electrolyte even at a relatively low treatment temperature. Another object of the present invention is to provide a method for producing such a glass frit.

### SOLUTION TO PROBLEM

The present invention provides a glass frit including:
lithium (Li);
an element M;
phosphorus (P);
oxygen (O); and
at least one element of boron (B) and silicon (Si), in which
the element M includes at least one element selected from the group consisting of zirconium (Zr), hafnium (Hf), tin (Sn), samarium (Sm), niobium (Nb), tantalum (Ta), tungsten (W), and molybdenum (Mo), and
the glass frit contains a seed crystal.

In addition, the present invention provides a method for producing a glass frit, the method including:
(1) a step of mixing raw materials containing lithium (Li), an element M, phosphorus (P), oxygen (O), and at least one element selected from boron (B) and silicon (Si) to prepare a mixed powder, where the element M includes at least one element selected from the group consisting of zirconium (Zr), hafnium (Hf), tin (Sn), samarium (Sm), niobium (Nb), tantalum (Ta), tungsten (W), and molybdenum (Mo);
(2) a step of heating the mixed powder to a temperature of 1200°C to 1650°C to obtain a melt;
(3) a step of cooling the melt to form a glass cullet containing a seed crystal; and
(4) a step of pulverizing the glass cullet to obtain a glass frit.

### ADVANTAGEOUS EFFECTS OF INVENTION

In the present invention, it is possible to provide a glass frit for a solid electrolyte capable of sufficiently bonding an active material and a solid electrolyte even at a relatively low treatment temperature. In the present invention, it is also possible to provide a method for producing such a glass frit.

### BRIEF DESCRIPTION OF DRAWINGS

FIG. 1 is a flow chart showing an example of a method for producing a glass frit according to one embodiment of the present invention.
FIG. 2 is a diagram showing an example of a particle size distribution of a glass frit (sample 2) according to one embodiment of the present invention.
FIG. 3 is a diagram showing an example of an X-ray diffraction pattern of the glass frit (sample 1) according to one embodiment of the present invention.
FIG. 4 is a diagram showing an example of an X-ray diffraction pattern of a glass frit (sample 2) according to another embodiment of the present invention.
FIG. 5 is a diagram showing an example of an X-ray diffraction pattern of a glass frit (sample 3) according to still another embodiment of the present invention.
FIG. 6 is a diagram showing an example of an X-ray diffraction pattern of a glass frit (sample 21) according to a comparative example.

### DESCRIPTION OF EMBODIMENTS

### (Glass Frit According to One Embodiment of Present Invention)

Hereinafter, one embodiment of the present invention will be described.

In one embodiment of the present invention, there is provided a glass frit containing:
lithium (Li);
an element M;
phosphorus (P);
oxygen (O); and
at least one of boron (B) and silicon (Si), in which
the element M includes at least one element selected from the group consisting of zirconium (Zr), hafnium (Hf), tin (Sn), samarium (Sm), niobium (Nb), tantalum (Ta), tungsten (W), and molybdenum (Mo), and
the glass frit contains a seed crystal.

As described above, according to the inventors of the present application, when the LiTa₂PO₈ crystal is used as a solid electrolyte in an electrode, it is understood that it is not easy to sufficiently co-sinter an active material and the solid electrolyte. When the active material and the solid electrolyte are not sintered sufficiently, a contact area between the two is small, making it difficult to increase the ion conductivity. On the other hand, when an attempt is made to increase a sintering temperature in order to sufficiently proceed the co-sintering, there is a risk that the active material is then damaged by heat, and is not able to exhibit sufficient properties.

In contrast, in one embodiment of the present invention, a glass frit containing a seed crystal is provided.

Since the glass frit according to the embodiment of the present invention contains a seed crystal containing the element M, the glass frit is crystallized when heated to a temperature equal to or higher than a crystallization temperature to form a glass ceramic. In addition, the glass frit according to the embodiment of the present invention is fluidized by heating at a relatively low temperature.

Therefore, when the glass frit according to the embodiment of the present invention is subjected to a heat treatment together with the electrode active material, the glass frit according to the embodiment of the present invention is crystallized in a state of spreading around the electrode active material. Accordingly, a large contact area can be ensured between the glass ceramic and the electrode active material, and as a result, an ion conductivity of a sintered body can be remarkably increased.

In addition, in the case of using the glass frit according to the embodiment of the present invention, a relatively low heat treatment temperature (for example, 700°C to 1030°C) can be adopted, and thus the sintered body can be obtained without deteriorating the electrode active material.

### (Features of Glass Frit According to One Embodiment of Present Invention)

Hereinafter, some features of the glass frit according to the embodiment of the present invention (hereinafter referred to as a "first glass frit") will be described.

### (Composition)

The first glass frit contains Li, the element M, P, and O. In addition, the first glass frit contains at least one of B and silicon Si. In the present application, hereinafter, Li, the element M, P, and O are collectively also referred to as a "first component", and B and Si are collectively also referred to as a "second component".

The "first component" is a component that contributes to crystallization when the glass ceramic is formed by heating the first glass frit, and the "second component" is a component that contributes to formation of a glass matrix when the first glass frit is heated. However, these divisions are merely for convenience and are not absolute. For example, Li, P, and O may be present in both the "first component" and the "second component".

As described above, the first glass frit contains the element M, and the element M may include at least one selected from the group consisting of Zr, Hf, Sn, Sm, Nb, Ta, W, and Mo. In particular, the element M preferably includes Ta.

A content of Li is preferably in a range of 29.0 at% to 44.5 at%, more preferably in a range of 29.5 at% to 42.0 at%, still more preferably 30.0 at% to 39.0 at%, particularly preferably 30.5 at% to 36.0 at%, and most preferably 31.0 at% to 33.0 at%, with respect to a total amount of cations contained in the first glass frit.

In addition, a content of the element M is preferably 25.5 at% to 45.0 at%, more preferably 30.0 at% to 44.0 at%, still more preferably 35.0 at% to 43.0 at%, particularly preferably 38.0 at% to 42.0 at%, and most preferably 40.0 at% to 41.0 at%, with respect to the total amount of cations contained in the first glass frit.

Further, a content of P is preferably 13.0 at% to 22.5 at%, more preferably 15.0 at% to 22.0 at%, still more preferably 17.0 at% to 21.5 at%, particularly preferably 19.0 at% to 21.0 at%, and most preferably 20.0 at% to 20.5 at%, with respect to the total amount of cations contained in the first glass frit.

In the case of containing B, a content of B is preferably 2.5 at% to 13.0 at%, more preferably 3.0 at% to 11.0 at%, still more preferably 3.5 at% to 9.0 at%, particularly preferably 4.0 at% to 7.0 at%, and most preferably 4.5 at% to 5.5 at%, with respect to the total amount of cations contained in the first glass frit.

Further, in the case of containing Si, a content of Si is preferably 0.8 at% to 3.8 at%, more preferably 1.0 at% to 3.0 at%, still more preferably 1.2 at% to 2.5 at%, particularly preferably 1.3 at% to 2.0 at%, and most preferably 1.4 at% to 1.7 at%, with respect to the total amount of cations contained in the first glass frit.

The first glass frit may have a glass transition temperature Tg in a range of 600°C to 800°C.

In addition, in the first glass frit, the seed crystal may contain a Ta₂Oₓ crystal (x = 3 to 5). x ≠ 5 represents a state where tantalum oxide crystals having a Ta oxidation number of +2, +3, and +4 are mixed in the Ta₂O₅ crystal.

In the first glass frit, when a 50% particle diameter on a volume basis in a cumulative particle size distribution is defined as D50, the D50 is, for example, preferably in a range of 0.01 µm to 20 µm, more preferably in a range of 0.05 µm to 15 µm, still more preferably in a range of 0.1 µm to 10 µm, particularly preferably in a range of 0.3 µm to 5 µm, and most preferably in a range of 0.5 µm to 3 µm.

The first glass frit is heated to a temperature equal to or higher than the crystallization temperature during use.

With such a heat treatment, the seed crystal contained in the glass frit becomes a nucleus, and the crystallization proceeds in the glass frit. As a result, a glass ceramic having a crystal portion and a grain boundary portion around the crystal portion is formed. Assuming M = Ta, the main crystal portion is LiTa₂PO₈, but may contain other crystals.

The glass ceramic formed of the first glass frit has a feature of a high ion conductivity. The ion conductivity of the glass ceramic is, for example, 0.40 mS/cm or more.

The glass ceramic thus obtained has a feature that the second component is present in the crystal. For example, in the case where the first glass frit contains Si and B, Si and B are present in the crystal of the glass ceramic. Assuming that M = Ta, the main crystal portion is LiTa₂PO₈ in which a part of P is substituted with at least one of Si and B, but may contain other crystals.

### (Method for Producing Glass Frit According to One Embodiment of Present Invention)

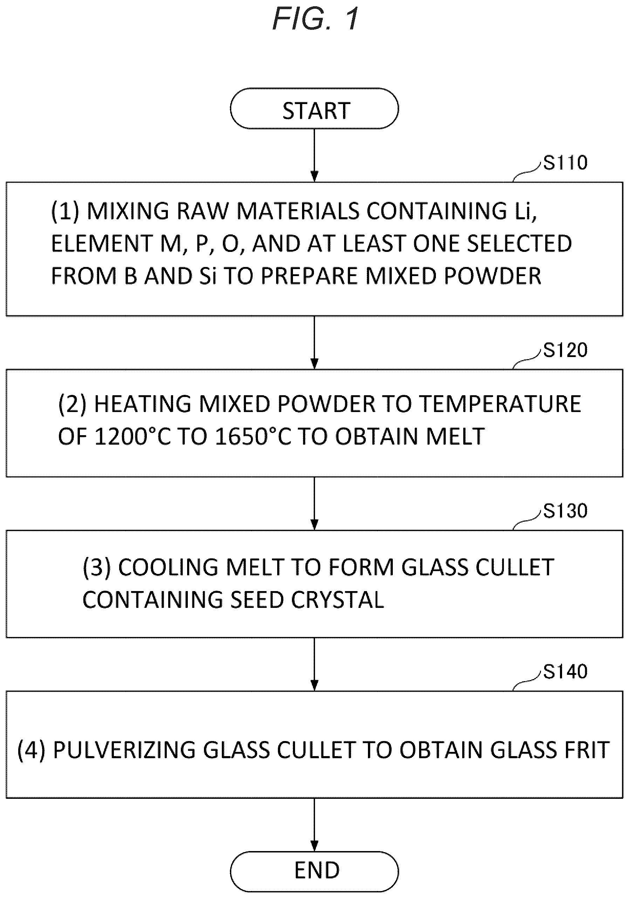

Next, an example of a method for producing the glass frit according to the embodiment of the present invention having the above features will be described with reference to FIG. 1.

FIG. 1 schematically shows an example of a flow of a method for producing the glass frit according to the embodiment of the present invention.

As shown in FIG. 1, the method for producing the glass frit according to the embodiment of the present invention (hereinafter referred to as a "first method") includes:
(1) a step (S110) of mixing raw materials containing Li, an element M, P, O, and at least one selected from B and Si to prepare a mixed powder;
(2) a step (S120) of heating the mixed powder to a temperature of 1200°C to 1650°C to obtain a melt;
(3) a step (S130) of cooling the melt to form a glass cullet containing a seed crystal; and
(4) a step (S140) of pulverizing the glass cullet to obtain a glass frit.

Hereinafter, each step will be described in more detail.

### (Step S110)

First, the raw materials are mixed to prepare a mixed powder.

The raw materials include a first raw material for the "first component" described above and a second raw material for the "second component" described above.

The first raw material and the second raw material are preferably mixed in a powder state.

The first raw material contains Li, the element M, O, and P. As described above, the element M represents at least one element selected from the group consisting of Zr, Hf, Sn, Sm, Nb, Ta, W, and Mo.

For example, the first raw material may contain a Li compound and/or a phosphate. In addition, the first raw material may contain a compound of the element M and/or a phosphate. For example, in the case where the element M is Ta, the first raw material may contain tantalum oxide.

On the other hand, the second raw material contains Si and B. The second raw material may further contain Li and/or P. For example, the second raw material may contain a Si compound, a lithium salt of silicon oxide, a phosphate of silicon, an oxide of B, or a lithium salt of boron oxide.

Further, the first raw material and the second raw material may be a composite oxide of them.

Specific examples thereof include the following raw materials:
examples of the Li compound include lithium carbonate (Li₂CO₃), lithium hydroxide and a hydrate thereof (LiOH and LiOH.H₂O), lithium oxide (Li₂O), lithium sulfate (Li₂SO₄), lithium nitrate (LiNO₃), a lithium halide (LiF, LiCl, LiBr, and LiI), lithium cyanide (LiCN), lithium citrate (Li₃C₆H₅O₇), lithium acetate (C₂H₃LiO₂), and lithium oxalate (C₂Li₂O₄);
examples of the compound of the element M include, assuming M = Ta, a tantalum oxide (Ta₂O₅ and TaO₂), a tantalum halide (TaF₅, TaCl₅, Ta₂Br₁₀, and Ta₂I₁₀), and tantalum oxide fluoride (TaFO₂);
examples of phosphoric acid include H₃PO₄, H₄P₂O₇, HPO₃, and P₂O₅;
examples of boric acid include H₃BO₃, HBO₂, and H₂B₄O₇;
examples of the Si compound include silicon dioxide (SiO₂); and
examples of the composite oxide include a lithium phosphate (LiPO₃, Li₃PO₄, and LiH₂PO₄), a lithium silicate (Li₂SiO₃ and Li₄SiO₄), a lithium borate (LiBO₂, Li₃BO₃, and Li₂B₄O₇), and lithium tantalate (LiTaO₃).

When the first raw material and the second raw material are sufficiently mixed, a mixed powder is prepared.

### (Step S120)

Next, the prepared mixed powder is heated and melted in the air to form a melt.

A melting temperature is in a range of 1200°C to 1650°C, preferably in a range of 1300°C to 1600°C, and more preferably in a range of 1400°C to 1500°C.

A melting time varies depending on the amount of the mixed powder and the melting temperature, and may be, for example, 5 hours or shorter. The melting time may be, for example, 2 hours or shorter, 1 hour or shorter, or 30 minutes or shorter. Atmosphere for the heating and melting is preferably the air, or may be an oxidizing atmosphere or an inert gas atmosphere.

### (Step S130)

Next, the melt is cooled.

The cooling method is not particularly limited. The progress of crystallization from a melt involves a two-stage process: nucleation and crystal growth from a nucleus. Even when a seed crystal that serves as a nucleus is contained, it is possible to obtain a glass by cooling the melt faster than the rate of crystal growth. For example, the melt may be quenched by a roll-out machine, a press machine, dripping into a cooling liquid, or the like.

When the melt is cooled, a glass cullet containing a seed crystal is formed. At this time, the seed crystal that serves as a nucleus may be contained in the melt, or the nucleus may be generated from the melt.

The seed crystal contains an oxide of the element M. For example, in the case where the element M is Ta, the seed crystal may be Ta₂Oₓ (x = 3 to 5).

### (Step S140)

Next, the obtained glass cullet is pulverized to form a glass frit. A method of pulverizing the glass cullet is not particularly limited, and a well-known method such as a dry ball mill treatment method may be used.

The glass frit is preferably pulverized such that D50 is in a range of 0.01 µm to 20 µm, where D50 is a 50% particle diameter on a volume basis in the cumulative particle size distribution.

With the above steps, the glass frit according to the embodiment of the present invention can be produced.

The glass frit produced using the first method is heated to a temperature equal to or higher than the crystallization temperature during use. A heat treatment temperature may be, for example, in a range of 700°C to 1030°C.

With such a heat treatment, the seed crystal contained in the glass frit becomes a nucleus, and the crystallization proceeds in the glass frit. As a result, a glass ceramic having a crystal portion and a grain boundary portion around the crystal portion is formed.

The formed glass ceramic has a high ion conductivity. For example, the glass ceramic may have an ion conductivity of more than 0.40 mS/cm.

### Examples

Hereinafter, Examples of the present invention will be described. Note that, in the following description, Examples 1 to 4 and 11 to 13 are Inventive Examples, and Examples 21 to 23 are Comparative Examples.

### (Example 1)

A glass frit was prepared by the following method.

### (Preparation of Glass Cullet)

First, 24.11 g of a tantalum oxide (Ta₂O₅, manufactured by Kanto Chemical Co., Inc., a 3N5 high-purity reagent) powder, 4.69 g of lithium metaphosphate (LiPO₃, manufactured by Hakushin Chemical Laboratory Co., Ltd.), 0.67 g of lithium metaborate (LiBO₂, manufactured by FUJIFILM Wako Pure Chemical Corporation, purity: 99% or more), 0.40 g of lithium carbonate (Li₂CO₃, manufactured by Kanto Chemical Co., Inc., a 3N5 high-purity reagent), and 0.37 g of lithium metasilicate (Li₂SiO₃, manufactured by Strem Chemicals Inc., purity: 99%) were mixed to prepare a mixed powder. The mixed powder was prepared such that lithium (Li) was 32.4%, tantalum (Ta) was 40.7%, phosphorus (P) was 20.3%, silicon (Si) was 1.5%, and boron (B) was 5.0% in at% of cations.

Next, 30 g of this mixed powder was charged into a platinum container and melted by a heat treatment in the air. The melting temperature was 1450°C, and the melting time was 30 minutes. Thereafter, the melt was sufficiently stirred with a platinum rod.

Next, the obtained melt was quenched by using a roll-out machine. Accordingly, a flaky glass cullet (hereinafter referred to as a "glass cullet 1") of about 27 g was obtained.

It is found that the obtained glass cullet 1 includes a mixture of an opaque portion and a transparent portion.

### (Preparation of Glass Frit)

The glass cullet 1 was pulverized as follows to prepare a glass frit.

15 g of the glass cullet 1 and 250 g of a stabilized zirconia ball having a diameter of 10 mm were charged into a 250 mL HDPE container and subjected to a ball mill pulverization treatment. A rotation speed was 94 rpm, and a pulverization time was 15 hours.

Accordingly, a white powdery glass frit (hereinafter referred to as a "sample 1") was obtained.

### (Example 2)

A glass frit (hereinafter referred to as a "sample 2") was prepared in the same manner as in Example 1 described above.

However, in Example 2, the powders were mixed to prepare a mixed powder such that, in the step of (Preparation of Glass Cullet) described above, Li was 34.0%, Ta was 38.8%, P was 19.4%, Si was 1.8%, and B was 6.1% in terms of at% of cations. Other conditions are the same as those in Example 1.

### (Example 3)

A glass frit (hereinafter referred to as a "sample 3") was prepared in the same manner as in Example 1 described above.

However, in Example 3, the powders were mixed to prepare a mixed powder such that, in the step of (Preparation of Glass Cullet) described above, Li was 36.7%, Ta was 35.4%, P was 17.7%, Si was 2.4%, and B was 7.9% in terms of at% of cations. Other conditions are the same as those in Example 1.

### (Example 4)

A glass frit (hereinafter referred to as a "sample 4") was prepared in the same manner as in Example 1 described above.

However, in Example 4, the powders were mixed to prepare a mixed powder such that, in the step of (Preparation of Glass Cullet) described above, Li was 40.1%, Ta was 31.0%, P was 15.5%, Si was 3.1%, and B was 10.3% in terms of at% of cations. Other conditions are the same as those in Example 1.

### (Example 11)

A glass frit (hereinafter referred to as a "sample 11") was prepared in the same manner as in Example 1 described above.

However, in Example 11, the melting temperature of the mixed powder was 1300°C, and the melting time was 60 minutes. Other conditions are the same as those in Example 1.

### (Example 12)

A glass frit (hereinafter referred to as a "sample 12") was prepared in the same manner as in Example 1 described above.

However, in Example 12, the melting temperature of the mixed powder was 1550°C and the melting time was 20 minutes. Other conditions are the same as those in Example 1.

### (Example 13)

A glass cullet (hereinafter referred to as a "glass cullet 13") was prepared in the same manner as in Example 1 described above. The glass cullet 13 was pulverized to prepare a glass frit (hereinafter referred to as a "sample 13").

However, in Example 13, the time of the pulverization treatment for the glass frit 13 was 6 hours. Other conditions are the same as those in Example 1.

### (Example 21)

A glass frit (hereinafter referred to as a "sample 21") was prepared in the same manner as in Example 1 described above.

However, in Example 21, the powders were mixed to prepare a mixed powder such that, in the step of (Preparation of Glass Cullet) described above, Li was 44.6%, Ta was 25.4%, P was 12.7%, Si was 4.0%, and B was 13.3% in terms of at% of cations. Other conditions are the same as those in Example 1.

### (Example 22)

An attempt was made to prepare a glass cullet (hereinafter referred to as a "sample 22") in the same manner as in Example 1 described above.

However, in Example 22, the melting temperature was 1100°C and the melting time was 100 minutes for the mixed powder.

However, under this melting treatment condition, the mixed powder could not be sufficiently melted.

### (Example 23)

A mixture was prepared by the following method.

First, 23.45 g of lithium metaphosphate (LiPO₃, manufactured by Hakushin Chemical Laboratory Co., Ltd.), 3.35 g of lithium metaborate (LiBO₂, manufactured by FUJIFILM Wako Pure Chemical Corporation, purity: 99% or more), 2.00 g of lithium carbonate (Li₂CO₃, manufactured by Kanto Chemical Co., Inc., a 3N5 high-purity reagent), and 1.85 g of lithium metasilicate (Li₂SiO₃, manufactured by Strem Chemicals Inc., purity: 99%) were mixed to prepare a mixed powder. The mixed powder was prepared such that lithium (Li) was 54.7%, phosphorus (P) was 34.3%, silicon (Si) was 2.5%, and boron (B) was 8.5% in at% of cations.

Next, this mixed powder was charged into a platinum container and melted by a heat treatment. The melting temperature was 1300°C, and the melting time was 30 minutes. Thereafter, the melt was sufficiently stirred with a platinum rod.

Next, the obtained melt was quenched by using a roll-out machine. Accordingly, a flaky glass cullet (hereinafter referred to as a "glass cullet 23") was obtained.

Next, 12.28 g of a tantalum oxide (Ta₂O₅, manufactured by Kanto Chemical Co., Inc., a 3N5 high-purity reagent) powder was added to 3.00 g of the glass cullet 23. To the mixed powder, 250 g of a stabilized zirconia ball having a diameter of 10 mm was added, and then the mixed powder was charged into a 250 mL HDPE container and subjected to a ball mill pulverization treatment. A rotation speed was 94 rpm, and a pulverization time was 15 hours.

Accordingly, a white powder (hereinafter referred to as a "sample 23") was obtained.

Table 1 below summarizes the production conditions and the like of the samples produced in each example.

**Table 1**

| Sample | Mixed powder preparation step | | | | | Melting step | | Pulverization step | Note |
|---|---|---|---|---|---|---|---|---|---|
| | Content (at%) of cation in mixed powder | | | | | Melting temperature (°C) | Melting time (min) | Rotation speed (rpm) × pulverization time (h) | |
| | Li | Ta | P | Si | B | | | | |
| 1 | 32.4 | 40.7 | 20.3 | 1.5 | 5.0 | 1450 | 30 | 94 × 15 | |
| 2 | 34.0 | 38.8 | 19.4 | 1.8 | 6.1 | 1450 | 30 | 94 × 15 | |
| 3 | 36.7 | 35.4 | 17.7 | 2.4 | 7.9 | 1450 | 30 | 94 × 15 | |
| 4 | 40.1 | 31.0 | 15.5 | 3.1 | 10.3 | 1450 | 30 | 94 × 15 | |
| 11 | 32.4 | 40.7 | 20.3 | 1.5 | 5.0 | 1300 | 60 | 94 × 15 | |
| 12 | 32.4 | 40.7 | 20.3 | 1.5 | 5.0 | 1550 | 20 | 94 × 15 | |
| 13 | 32.4 | 40.7 | 20.3 | 1.5 | 5.0 | 1450 | 30 | 94 × 6 | |
| 21 | 44.6 | 25.4 | 12.7 | 4.0 | 13.3 | 1450 | 30 | 94 × 15 | |
| 22 | 32.4 | 40.7 | 20.3 | 1.5 | 5.0 | 1100 | 100 | - | Not melted |
| 23 | 54.7 | - | 34.3 | 2.5 | 8.5 | 1300 | 30 | 94 × 15 | Mixture of glass cullet + Ta₂O₅ |

### (Evaluation)

Each sample was evaluated as follows.

### (Measurement of Glass Transition Temperature Tg)

The glass transition temperature Tg of each sample was measured by using TG-DTA (thermogravimetry differential thermal analysis). The measurement was performed in the air, and the temperature was increased from room temperature to 1000°C at a rate of 5°C per minute.

### (Measurement of Particle Size Distribution)

The particle size distribution of each sample was measured by using a laser diffraction scattering device (SALD-2100, manufactured by Shimadzu Corporation). Based on the obtained results, D50 (50% particle diameter on a volume basis in the cumulative particle size distribution) was determined.

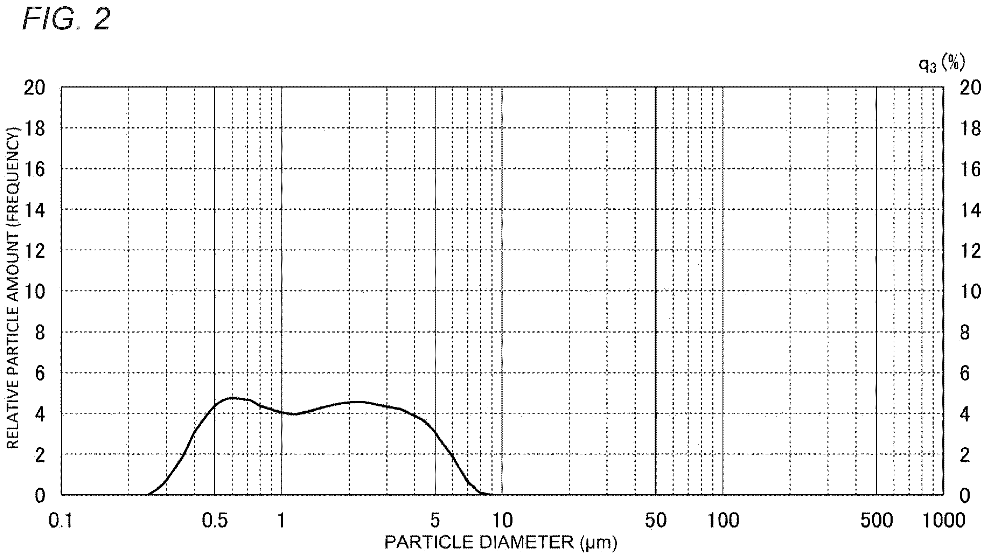

FIG. 2 shows an example of a particle size distribution measurement result obtained in sample 2. The D50 of the sample 2 was 1.5 µm.

### (X-ray Diffraction Analysis)

The X-ray diffraction analysis (Cu-Kα rays) of each sample was performed. Based on the obtained results, whether the sample contained a seed crystal was evaluated.

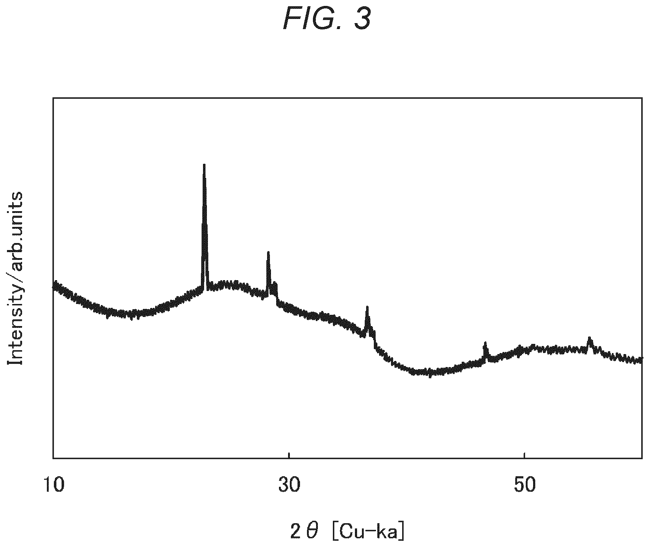

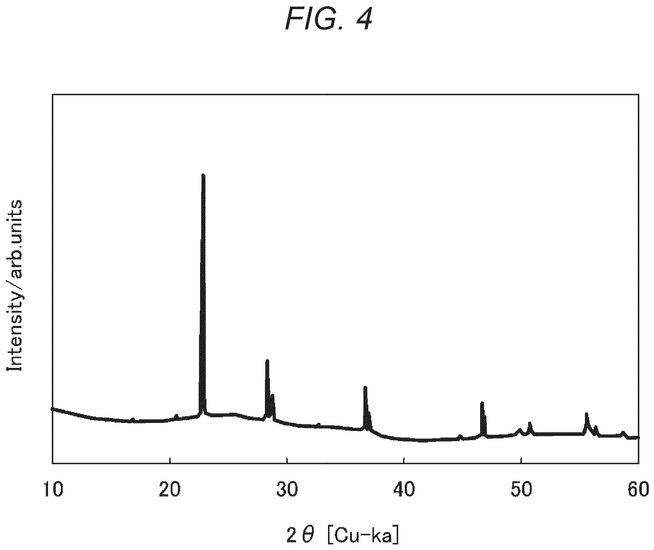

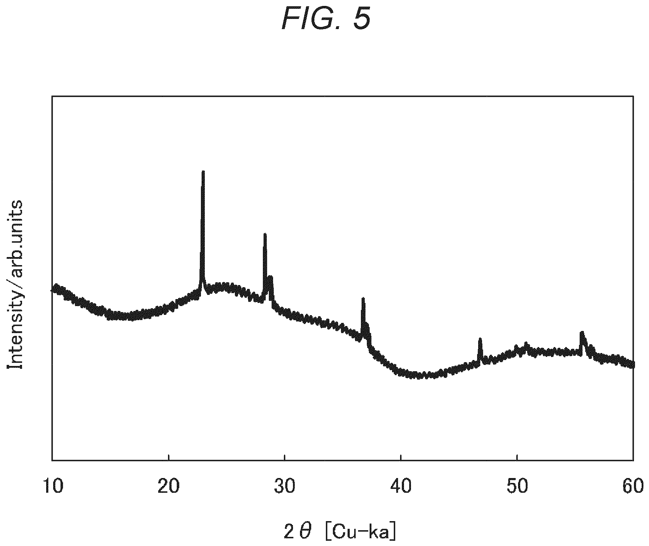

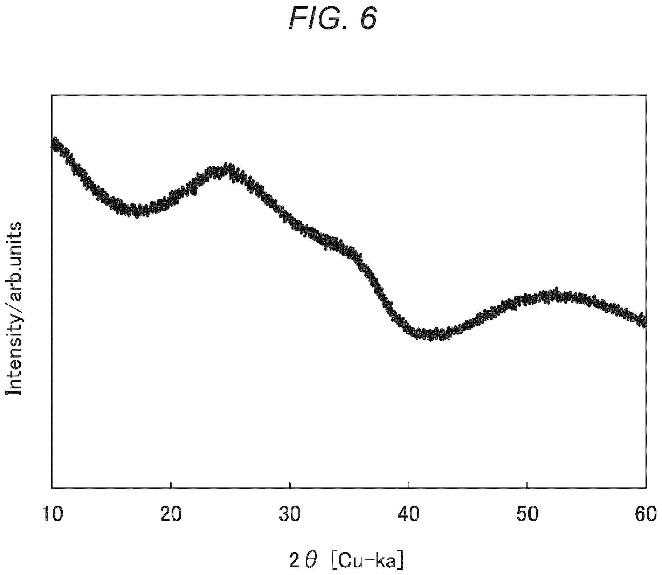

FIG. 3 to FIG. 6 each show an example of the obtained X-ray diffraction pattern. FIG. 3 shows an X-ray diffraction pattern obtained in the sample 1. FIG. 4 shows an X-ray diffraction pattern obtained in the sample 2. FIG. 5 shows an X-ray diffraction pattern obtained in the sample 3. FIG. 6 shows an X-ray diffraction pattern obtained in the sample 21.

As can be seen from FIG. 3 to FIG. 5, a diffraction peak derived from a crystal is observed in the sample 1 to the sample 3, and the sample 1 to the sample 3 contain a seed crystal. Note that, the diffraction peak corresponds to tantalum oxide (Ta₂O₅).

On the other hand, in the sample 21, no peak corresponding to a crystal is observed, and it can be seen that the sample 21 is amorphous.

### (Measurement of Ion Conductivity)

A glass ceramic was prepared from each sample by the following method. The ion conductivity was measured using the obtained glass ceramic.

### (Preparation of Glass Ceramic)

First, each sample was molded to prepare a molded body.

0.5 g of the glass frit (sample) was charged into a cemented carbide mold having a diameter of 10 mm and subjected to uniaxial pressing at a press pressure of 40 MPa for 2 minutes.

Thereafter, isostatic pressing was further performed at a pressure of 200 MPa to obtain a molded body having a diameter of 10 mm and a thickness of 1.5 mm.

Next, the molded body was subjected to a heat treatment by the following method.

First, the molded body was placed on a platinum dish. The platinum dish was heated to 950°C at a heating rate of 300°C/hour in the air. After maintaining at 950°C for 5 hours, the platinum dish was cooled to room temperature at a cooling rate of 300°C/hour.

After the heat treatment, a white glass ceramic (hereinafter referred to as a "glass ceramic sample") was obtained. The dimension of the glass ceramic sample was 9.0 mm in diameter and 1.3 mm in thickness.

### (Measurement of AC Impedance)

A gold electrode (diameter: 5 mm) was formed on both surfaces of the glass ceramic sample by using a vapor deposition method. Next, a measurement voltage of 20 mV was applied to the gold electrode, and the impedance of the glass flake was measured by using an AC impedance method. For the measurement, 4990EDMS-120K (manufactured by TOYO Corporation) was used, and the measurement frequency was 100 Hz to 100 MHz. The obtained impedance spectrum was fitted with an equivalent circuit using equivalent circuit analysis software ZView software attached to the device, and the ion conductivity of lithium ions was evaluated.

Table 2 below summarizes the evaluation results obtained in each sample.

**Table 2**

| Sample | Glass transition temperature (°C) | Seed crystal | D50 (µm) | Ion conductivity (mS/cm) |
|---|---|---|---|---|
| 1 | 750 | Present (Ta₂O₅) | 1.0 | 1.40 |
| 2 | 696 | Present (Ta₂O₅) | 1.5 | 0.60 |
| 3 | 649 | Present (Ta₂O₅) | 1.3 | 0.46 |
| 4 | 604 | Present (Ta₂O₅) | 2.8 | 0.51 |
| 11 | 735 | Present (Ta₂O₅) | 0.8 | 0.82 |
| 12 | 762 | Present (Ta₂O₅) | 1.5 | 1.23 |
| 13 | 748 | Present (Ta₂O₅) | 6.2 | 1.38 |
| 21 | 562 | Absent | 0.9 | 0.04 |
| 23 | 350 | Absent | 12.5 | Not measurable |

As shown in Table 2, it can be seen that the sample 21 and the sample 23 do not contain a seed crystal. On the other hand, it can be seen that the sample 1 to the sample 4 and the sample 11 to the sample 13 contain a Ta₂O₅ seed crystal.

In addition, as shown in Table 2, it can be seen that the glass ceramics prepared from the sample 21 and the sample 23 do not exhibit a good ion conductivity. In contrast, it can be seen that the glass ceramics prepared from the sample 1 to the sample 4 and the sample 11 to the sample 13 have a high ion conductivity of more than 0.40 mS/cm.

From the above results, it is expected that, in the case where the sample 1 (or any one of the sample 2 to the sample 4 and the sample 11 to the sample 13) is added to the electrode active material and heated, the sample 1 is fluidized and spreads around the electrode active material, and the sample 1 changes to glass ceramic. Therefore, it is expected that the obtained sintered body has a large contact area between the glass ceramic and the electrode active material and has a high ion conductivity.

The present invention includes the following aspects.

### (Aspect 1)

A glass frit including:
lithium (Li);
an element M;
phosphorus (P);
oxygen (O); and
at least one element of boron (B) and silicon (Si), in which
the element M includes at least one element selected from the group consisting of zirconium (Zr), hafnium (Hf), tin (Sn), samarium (Sm), niobium (Nb), tantalum (Ta), tungsten (W), and molybdenum (Mo), and
the glass frit contains a seed crystal.

### (Aspect 2)

The glass frit according to Aspect 1, in which the element M includes Ta.

### (Aspect 3)

The glass frit according to Aspect 1 or 2, having a glass transition temperature Tg in a range of 600°C to 800°C.

### (Aspect 4)

The glass frit according to any one of Aspects 1 to 3, in which the seed crystal contains a Ta₂Oₓ (x = 3 to 5) crystal.

### (Aspect 5)

The glass frit according to any one of Aspects 1 to 4, having a D50 in a range of 0.01 µm to 20 µm, provided that the D50 is 50% particle diameter on a volume basis in a cumulative particle size distribution.

### (Aspect 6)

A method for producing a glass frit, the method including:
(1) mixing raw materials containing lithium (Li), an element M, phosphorus (P), oxygen (O), and at least one element selected from boron (B) and silicon (Si) to prepare a mixed powder, where the element M includes at least one element selected from the group consisting of zirconium (Zr), hafnium (Hf), tin (Sn), samarium (Sm), niobium (Nb), tantalum (Ta), tungsten (W), and molybdenum (Mo);
(2) heating the mixed powder to a temperature of 1200°C to 1650°C to obtain a melt;
(3) cooling the melt to form a glass cullet containing a seed crystal; and
(4) pulverizing the glass cullet to obtain a glass frit.

The present application claims priority based on Japanese Patent Application No. 2022-148695 filed on September 20, 2022, and the entire contents thereof are incorporated herein by reference in the present application.

## Claims

1. A glass frit comprising:
lithium (Li);
an element M;
phosphorus (P);
oxygen (O); and
at least one element of boron (B) and silicon (Si), wherein
the element M includes at least one element selected from the group consisting of zirconium (Zr), hafnium (Hf), tin (Sn), samarium (Sm), niobium (Nb), tantalum (Ta), tungsten (W), and molybdenum (Mo), and
the glass frit contains a seed crystal.

2. The glass frit according to claim 1, wherein the element M includes Ta.

3. The glass frit according to claim 1 or 2, having a glass transition temperature Tg in a range of 600°C to 800°C.

4. The glass frit according to claim 1 or 2, wherein the seed crystal contains a Ta₂Oₓ (x = 3 to 5) crystal.

5. The glass frit according to claim 1 or 2, having a D50 in a range of 0.01 µm to 20 µm, provided that the D50 is 50% particle diameter on a volume basis in a cumulative particle size distribution.

6. A method for producing a glass frit, the method comprising:
(1) mixing raw materials containing lithium (Li), an element M, phosphorus (P), oxygen (O), and at least one element selected from boron (B) and silicon (Si) to prepare a mixed powder, where the element M includes at least one element selected from the group consisting of zirconium (Zr), hafnium (Hf), tin (Sn), samarium (Sm), niobium (Nb), tantalum (Ta), tungsten (W), and molybdenum (Mo);
(2) heating the mixed powder to a temperature of 1200°C to 1650°C to obtain a melt;
(3) cooling the melt to form a glass cullet containing a seed crystal; and
(4) pulverizing the glass cullet to obtain a glass frit.
